# EUROPEAN PATENT APPLICATION

(11) **EP 4 813 908 A1**
(43) Date of publication of application: **30.09.2026**
(21) Application number: 26168731.3
(22) Date of filing: 27.03.2026
(51) Int. Cl.: C01B 3/042, C01B 13/02

(54) **HYDROGEN AND OXYGEN GENERATION USING DETONATION WAVES**

(30) Priority: 28.03.2025 US 202563779367 P
(71) Applicant: Green Constellation Inc., Boynton Beach, Florida 33472 (US)
(72) Inventor: Gazetov, Rafael, Visaginas (LT); Saripov, Arslan, Visaginas (LT); Saripova, Marina, Visaginas (LT)
(74) Representative: Cabinet Chaillot

(57) **Abstract**

A system and method are disclosed for the production of green hydrogen and oxygen from water using thermal decomposition driven by pulsed or continuous-spin detonation waves. In some embodiments, fresh water is converted into low-temperature steam and superheated beyond 3500°C using multi-stage shock-resonant compression within cooled gas-dynamic resonators, leading to dissociation of water into hydrogen and oxygen. In other embodiments, salt water is first desalinated by detonation-induced evaporation and fragmentation, producing steam and sea salt, after which the steam is thermally decomposed. A centrifugal vortex reactor is used to separate the resulting hydrogen and oxygen gases based on molecular weight. The system is capable of operating in a self-sustaining mode by recycling part of the generated gases for continued detonation. It is suitable for terrestrial and space-based applications, providing scalable, carbon-neutral hydrogen and oxygen production from fresh or salt water without the need for external electricity or fossil fuels.

## Description

### BACKGROUND OF THE SUBJECT MATTER

### 1. Field of the Subject Matter

The claimed subject matter relates, generally, to an apparatus and method for hydrogen production. More specifically, it relates to an apparatus and method for producing hydrogen and oxygen from water by direct thermal decomposition using the energy of either pulsed and/or rotating (i.e., spin) detonation waves.

### 2. Brief Description of the Prior Art

Hydrogen is an essential industrial gas with widespread application across sectors including agriculture, energy, metallurgy, and pharmaceuticals. Its role in fertilizer production, fuel cells, and refining processes is well established. The global push toward decarbonization has elevated green hydrogen to an increasingly important option in the transition to a lower-carbon economy. International agreements seek to limit the global temperature rise and to achieve a balance between anthropogenic emissions and removals in the second half of this century. Scalable, economically viable, and sustainable hydrogen production technologies therefore remain under development. Conventional hydrogen production processes such as steam methane reforming and other fossil-fuel-based routes remain dominant but are energy-intensive and emit substantial carbon dioxide.

The energy demands of traditional thermal processes present an economic burden, particularly because such processes depend on large amounts of process heat and steam required to drive endothermic reactions. The cost of supplying that heat depends on fuel price, plant configuration, and operating conditions, and fossil-fuel-fired heat sources also add associated carbon emissions. As industries seek alternatives, the challenge lies in replacing these established systems with lower-emission and cheap alternatives that do not compromise efficiency or reliability.

Electrolysis using renewable energy is presently considered a leading route for green hydrogen production. However, electrolysis remains expensive in many settings, primarily due to the cost of electricity, which is a major cost driver and often the dominant operating cost. Although solar and wind power are renewable, their intermittent nature can reduce electrolyzer utilization and/or require storage, grid balancing, and/or overbuild to maintain output. As a result, the cost of green hydrogen produced by electrolysis often remains higher than that produced by conventional methods. This price gap hinders the broader adoption of electrolysis-based hydrogen production, especially in cost-sensitive applications or regions with limited renewable infrastructure.

One such alternative involves the thermal decomposition of water at elevated temperatures to produce hydrogen and oxygen directly. Several prior approaches have relied on solar thermal systems, where concentrated solar energy heats water to high temperatures within solar furnaces or other high-temperature reactors. Related thermochemical cycle systems use recyclable reactive materials rather than direct one-step dissociation. Some proposals also utilize vortex or centrifugal separation for gas isolation. Despite continued research, such systems face several limitations. Direct thermolysis requires very high temperatures to obtain significant dissociation, and the reaction products must be rapidly quenched or separated to limit recombination. Solar-heated systems also depend on concentrated solar input and therefore may require thermal storage, hybrid heat supply, or both to support continuous operation.

Recent advancements have introduced detonation-based systems that utilize shock waves and related gas-dynamic effects to achieve high-temperature steam conditions without relying on solar input. Pulsed and continuous-spin detonation systems having rotating detonation waves, have demonstrated the ability to reach very high gas temperatures, using stoichiometric mixtures of fuel and oxidizer. Related detonation-based concepts have also been proposed for generating highly superheated steam. While originally developed for rocket propulsion, detonation systems offer a possible route for providing high-temperature heat for water splitting via thermal decomposition. However, existing designs focus on propulsion efficiency and do not incorporate water as a reactant for hydrogen production, nor are they optimized for steam handling and gas separation. Additionally, the high-temperature components in such systems require materials and cooling arrangements capable of withstanding high heat flux, adding complexity and cost to implementation.

Other detonation-based steam generation methods have also been proposed, including systems that produce highly superheated steam through cyclic detonation-based heating. Such systems can reach temperatures of around 2000 °C and are promising for steam generation and thermal processing applications. However, these devices are not configured with the combination of temperature control, residence time, rapid quench, and gas separation generally associated with direct water thermolysis. The absence of downstream hydrogen-oxygen separation, quench control, and integrated heat management further limits their application to hydrogen production. These systems, while useful for generating highly superheated steam, lack the integrated features necessary to support a complete hydrogen generation process.

Continuous detonation combustion devices, including annular combustion chambers, have been developed to stabilize detonation in various fuel mixtures for propulsion and related combustion applications. These systems enhance combustion efficiency through chamber geometry, injector arrangement, wave control, and related flow-management features. Nevertheless, like earlier pulse detonation technologies, these systems do not address the requirements of water dissociation, steam ultra-superheating, or hydrogen-oxygen separation. Their primary function remains combustion, and the published art does not generally disclose integrated adaptations for hydrogen production from water. Moreover, such systems often prioritize fuel combustion over the integration of water injection and ultra-superheating of steam in cycled steam thermal processes required for water splitting. The potential of these devices remains unrealized for hydrogen generation applications without substantial system redesign.

In direct thermolysis, recombination of hydrogen and oxygen during cooling is a known issue. As a result, rapid quenching and effective separation are relevant design considerations in systems intended to recover dissociation products. Even where very high temperature steam generation is proposed, the published disclosures still leave open issues of residence-time control, recombination suppression, gas purification, chamber durability, and complete process integration from water feed through hydrogen and oxygen recovery.

**In** the context of saltwater-based hydrogen production, conventional electrolysis requires a reliable supply of purified water rather than untreated seawater, and this has driven research into desalination technologies capable of treating saltwater for hydrogen applications. Traditional desalination systems, such as reverse osmosis or multi-stage flash distillation, add equipment and energy consumption to the overall process. Published analyses indicate, however, that seawater purification is often a smaller energy and cost contribution than the electrolysis step itself. Some pulse-jet or shock-wave-based desalination technologies have emerged, which employ shock waves and highspeed gas flows to fragment and evaporate water for separation. However, such systems may rely on fossil fuel combustion-derived heat generation, which can introduce associated emissions depending on the fuel used. Moreover, they typically lack integrated systems for salt separation, steam capture, or further utilization of desalinated water in hydrogen production systems.

Accordingly, what is needed is an integrated system and method that can process fresh water or saline water, generate high-temperature steam, provide controlled water dissociation conditions, limit recombination through rapid quench and separation, and recover hydrogen and oxygen in a usable form. There also remains a need for such systems to address salt removal, corrosion, fouling, materials limits, heat management, and continuous operation with a defined heat source and energy balance. However, in view of the art considered as a whole at the time the present claimed subject matter was made, it was not obvious to those of ordinary skill in the field of this claimed subject matter how the shortcomings of the prior art could be overcome.

### SUMMARY OF CLAIMED SUBJECT MATTER

The present claimed subject matter relates to a novel thermal system and method for the production of green hydrogen and oxygen using detonation-based superheating of water vapor, which may be derived from either fresh water or salt water, depending on the embodiment. In an aspect, the present disclosure pertains to systems for producing hydrogen and oxygen from a water-derived feed using detonation wave energy.

In some embodiments, a system may comprise a detonation chamber configured to receive a fuel, an oxidizer, and the water-derived feed, a detonation channel extending downstream from the detonation chamber, at least one gas-dynamic resonator disposed along the detonation channel, and a centrifugal vortex reactor fluidly and tangentially coupled downstream of the at least one gas-dynamic resonator. The system is configured to generate detonation waves to heat the water-derived feed to form a supersonic jet, thermally dissociate at least a portion of the water-derived feed into hydrogen-containing species and oxygen-containing species, and separate the hydrogen-containing species and oxygen-containing species within the centrifugal vortex reactor.

In some embodiments, the water-derived feed comprises fresh water or steam generated from fresh water. In some embodiments, the water-derived feed comprises steam and/or desalinated water derived from salt water. Additionally, in some embodiments, the detonation chamber is configured as a pulsed detonation chamber or an annular detonation chamber with continuous-spin detonation waves, and the at least one gas-dynamic resonator comprises one or more conical resonators configured to reflect detonation waves and produce multi-stage compression and superheating of the supersonic jet.

Moreover, in some embodiments, the system may further comprise a cooling system thermally coupled to the detonation chamber and/or the at least one gas-dynamic resonator, at least one outlet system configured to recover hydrogen, oxygen, or both, and a recycle system configured to return at least a portion of produced gases for transition to autonomous self-sufficiency operation mode. In some embodiments, the system further comprises one or more control systems configured to regulate flow, temperature, pressure, or composition of one or more streams.

Another aspect of the present disclosure pertains to methods for producing hydrogen and oxygen from a water-derived feed using detonation wave energy. In some embodiments, a method comprises introducing a stoichiometric mixture of fuel, oxidizer and the water-derived feed into a detonation chamber, generating one or more detonation waves to heat the water-derived feed and form a supersonic jet, compressing and superheating the supersonic jet using one or more conical gas-dynamic resonators, thermally dissociating at least a portion of the water-derived feed into hydrogen-containing species and oxygen-containing species, and tangentially introducing the supersonic jet into a centrifugal vortex reactor to separate the hydrogen-containing species and oxygen-containing species.

In some embodiments, the method further comprises generating the detonation waves using pulsed detonation or continuous-spin detonation, performing the compressing and superheating through multi-stage shock-resonant compression, quenching the supersonic jet downstream of the gas-dynamic resonator, and/or recycling at least a portion of produced hydrogen and oxygen for transition to autonomous self-sufficiency operation mode.

An additional aspect of the present disclosure pertains to integrated systems for producing hydrogen and oxygen from salt water using detonation wave energy. In some embodiments, an integrated system comprises a desalination module configured to receive salt water and produce a steam stream, desalinated water, or both, and a hydrogen and oxygen production module fluidly coupled to receive the steam stream and/or desalinated water. In some embodiments, the hydrogen and oxygen production module comprises a detonation chamber, at least one conical gas-dynamic resonator, and a centrifugal vortex reactor configured to thermally dissociate the steam stream, desalinated water, or both and separate hydrogen-containing species and oxygen-containing species.

Moreover, in some embodiments, the desalination module comprises a detonation-driven heating system configured to heat, fragment and evaporate salt water and separate salt from steam. In some embodiments, the hydrogen and oxygen production module and the desalination module are configured to exchange one or more of gases, liquids, or heat during operation. Additionally, in some embodiments, the desalination module comprises a centrifugal vortex reactor configured to separate sea-salt particles from the steam stream prior to delivery to the hydrogen and oxygen production module.

Applications extend to the development of hydrogen-based engines and gas-dynamic lasers for land, sea, air, and space transport, as well as for integrated energy and water solutions in remote or disaster-stricken areas. In some embodiments, the system may also be employed for pyrolysis of waste, biomass conversion, high-temperature metal processing, or even atmospheric water generation.

Additional aspects and advantages of the present disclosure will become readily apparent to those skilled in this art from the following detailed description, wherein only illustrative embodiments of the present disclosure are shown and described. As will be realized, the present disclosure is capable of other and different embodiments, and its several details are capable of modifications in various obvious respects, all without departing from the disclosure. Accordingly, the drawings and description are to be regarded as illustrative in nature, and not restrictive.

The invention accordingly comprises the features of construction, combination of elements, and arrangement of parts that will be exemplified in the disclosure set forth hereinafter and the scope of the invention will be indicated in the claims.

### BRIEF DESCRIPTION OF THE DRAWINGS

For a fuller understanding of the claimed subject matter, reference should be made to the following detailed description, taken in connection with the accompanying drawings, in which:
FIG. 1 is a plot depicting the change in the efficiency of direct thermal decomposition of water depending on the superheating temperature of steam, obtained as a result of conceptual study of hydrogen and oxygen production by thermal water splitting in a solar-powered membrane reactor, according to an embodiment of the present disclosure.
FIG. 2 is a graphical illustration depicting operation of a pulsed detonation steam superheater apparatus in kind of cooled pulsed detonation generator of overheated steam and hydrogen comprising a pulsed detonation chamber with a concave end wall surface equipped with two cooled coaxially placed conical gas-dynamic resonators, according to an embodiment of the present disclosure.
FIG. 3 is a graphical illustration depicting operation of a continuous-spin detonation steam superheater apparatus in kind of cooled continuous-spin detonation generator of overheated steam and hydrogen comprising an annular detonation chamber equipped with a coaxially placed cooled conical gas-dynamic resonator tangentially connected with the centrifugal vortex reactor, according to an embodiment of the present disclosure.
FIG. 4A is a graphical illustration depicting a side view of the operation of an advanced oxygen and hydrogen generation system ("AOHGS") for green hydrogen production by the direct thermal decomposition of fresh water using the energy of continuous-spin detonation waves, according to an embodiment of the present disclosure.
FIG. 4B is a graphical illustration depicting a top view of the operation of AOHGS for green hydrogen production by the direct thermal decomposition of fresh water using the energy of continuous-spin detonation waves, according to an embodiment of the present disclosure.
FIG. 5 is a graphical illustration depicting an isometric view of an AOHGS for green hydrogen production by the direct thermal decomposition of fresh water, according to an embodiment of the present disclosure.
FIG. 6 is a graphical illustration depicting an advanced environmental control and life support system ("AECLSS") of an existing orbital space station using an AOHGS, according to an embodiment of the present disclosure.
FIG. 7 is a graphical illustration depicting operation of an advanced desalination saltwater system ("ADSWS"), according to an embodiment of the present disclosure.
FIG. 8 is a graphical illustration depicting and advanced oxygen and hydrogen generation system from salt water ("AOHGS-SW") as a symbiosis of an AOHGS and an ADSWS, according to an embodiment of the present disclosure.

### DETAILED DESCRIPTION OF THE SUBJECT MATTER

In the following detailed description of the preferred embodiments, reference is made to the accompanying drawings, which form a part thereof, and within which are shown by way of illustration specific embodiments by which the claimed subject matter may be practiced. It is to be understood that one skilled in the art will recognize that other embodiments may be utilized, and it will be apparent to one skilled in the art that structural changes may be made without departing from the scope of the subject matter.

As such, elements/components shown in diagrams are illustrative of exemplary embodiments of the disclosure and are meant to avoid obscuring the disclosure. Any headings, used herein, are for organizational purposes only and shall not be used to limit the scope of the description or the claims.

Furthermore, the use of certain terms in various places in the specification, described herein, are for illustration and should not be construed as limiting. For example, any reference to an element herein using a designation such as "first," "second," and so forth does not limit the quantity or order of those elements, unless such limitation is explicitly stated. Rather, these designations may be used herein as a convenient method of distinguishing between two or more elements or instances of an element. Therefore, a reference to first and/or second elements does not mean that only two elements may be employed there or that the first element must precede the second element in some manner. Also, unless stated otherwise a set of elements may comprise one or more elements.

Reference in the specification to "one embodiment," "preferred embodiment," "an embodiment," or "embodiments" means that a particular feature, structure, characteristic, or function described in connection with the embodiment is included in at least one embodiment of the disclosure and may be in more than one embodiment. The appearances of the phrases "in one embodiment," "in an embodiment," "in embodiments," "in alternative embodiments," "in an alternative embodiment," or "in some embodiments" in various places in the specification are not necessarily all referring to the same embodiment or embodiments. The terms "include," "including," "comprise," and "comprising" shall be understood to be open terms and any lists that follow are examples and not meant to be limited to the listed items.

Referring in general to the following description and accompanying drawings, various embodiments of the present disclosure are illustrated to show its structure and method of operation. Common elements of the illustrated embodiments may be designated with similar reference numerals.

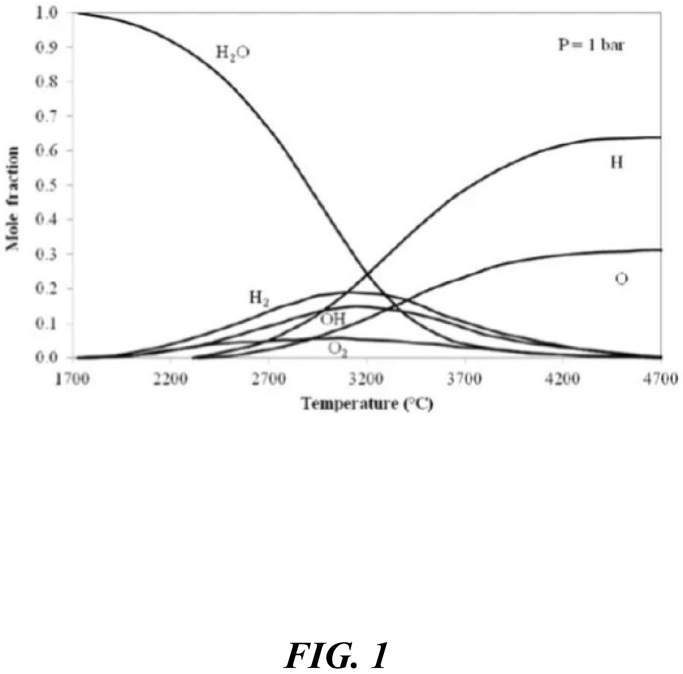

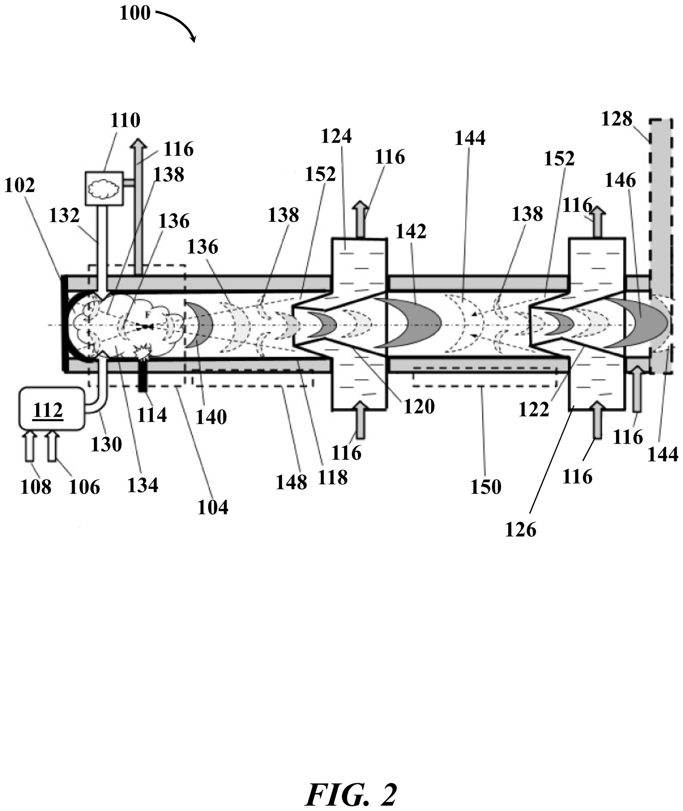

Accordingly, the relevant descriptions of such features apply equally to the features and related components among all the drawings. For example, any suitable combination of the features, and variations of the same, described with components illustrated in FIG. 1, can be employed with the components of FIG. 2, and vice versa. This pattern of disclosure applies equally to further embodiments depicted in subsequent figures and described hereinafter. It should be understood that the figures presented are not meant to be illustrative of actual views of any particular portion of the actual structure or method but are merely idealized representations employed to more clearly and fully depict the present claimed subject matter defined by the claims below.

### Definitions

As used in this specification and the appended claims, the singular forms "a," "an," and "the" include plural referents unless the content clearly dictates otherwise. As used in this specification and the appended claims, the term "or" is generally employed in its sense including "and/or" unless the context clearly dictates otherwise.

In the following description, for the purposes of explanation, numerous specific details are set forth in order to provide a thorough understanding of embodiments of the present technology. It will be apparent, however, to one skilled in the art that embodiments of the present technology may be practiced without some of these specific details.

The techniques introduced here can be embodied as special-purpose hardware (e.g., circuitry), as programmable circuitry appropriately programmed with software and/or firmware, or as a combination of special-purpose and programmable circuitry. Hence, embodiments may include a machine-readable medium having stored thereon instructions which may be used to program a computer (or other electronic devices) to perform a process. The machine-readable medium may include, but is not limited to, floppy diskettes, optical disks, compacts disc read-only memories (CD-ROMs), magneto-optical disks, ROMs, random access memories (RAMs), erasable programmable read-only memories (EPROMs), electrically erasable programmable read-only memories (EEPROMs), magnetic or optical cards, flash memory, or other type of media/machine-readable medium suitable for storing electronic instructions.

As used herein, the term "communicatively coupled" refers to any coupling mechanism known in the art, such that at least one electrical signal may be transmitted between one device and one alternative device. Communicatively coupled may refer to Wi-Fi, Bluetooth, wired connections, wireless connection, and/or magnets. For ease of reference, the exemplary embodiment described herein refers to Wi-Fi and/or Bluetooth, but this description should not be interpreted as exclusionary of other electrical coupling mechanisms.

As used herein, the terms "about," "approximately," or "roughly" refer to being within an acceptable error range (i.e., tolerance) for the particular value as determined by one of ordinary skill in the art, which will depend in part on how the value is measured or determined (e.g., the limitations of a measurement system) (e.g., the degree of precision required for a particular purpose, such as packaging and/or delivery of at least one prosthesis and/or prosthetic implant into a surgical pocket). As used herein, "about," "approximately," or "roughly" refer to within ±25% of the numerical.

All numerical designations, including ranges, are approximations which are varied up or down by increments of 1.0, 0.1, 0.01 or 0.001 as appropriate. It is to be understood, even if it is not always explicitly stated, that all numerical designations are preceded by the term "about." It is also to be understood, even if it is not always explicitly stated, that the compounds and structures described herein are merely exemplary and that equivalents of such are known in the art and can be substituted for the compounds and structures explicitly stated herein.

Wherever the term "at least," "greater than," or "greater than or equal to" precedes the first numerical value in a series of two or more numerical values, the term "at least," "greater than" or "greater than or equal to" applies to each of the numerical values in that series of numerical values. For example, greater than or equal to 1, 2, or 3 is equivalent to greater than or equal to 1, greater than or equal to 2, or greater than or equal to 3.

Wherever the term "no more than," "less than," or "less than or equal to" precedes the first numerical value in a series of two or more numerical values, the term "no more than," "less than" or "less than or equal to" applies to each of the numerical values in that series of numerical values. For example, less than or equal to 1, 2, or 3 is equivalent to less than or equal to 1, less than or equal to 2, or less than or equal to 3.

In the following detailed description, reference is made to the accompanying figures, which form a part of the present disclosure and illustrate exemplary embodiments by which the disclosed subject matter may be practiced. The figures are diagrammatic in nature and are provided to illustrate structural and operational relationships of the disclosed systems and methods. Elements and components shown in the figures are illustrative of exemplary embodiments and are not necessarily drawn to scale. Unless expressly stated otherwise, the terms "first," "second," and similar designations are used for distinction and not for limitation as to quantity, sequence, or relative importance.

### System And Method for Producing Hydrogen and Oxygen

The present disclosure relates to systems and/or methods for producing hydrogen and oxygen from fresh water and/or salt water using the energy of detonation waves. In a fresh-water embodiment, low-temperature primary steam may be preheated and then superheated to a temperature at which direct thermal decomposition of water molecules into hydrogen-containing and oxygen-containing species occurs. The superheating is produced by multi-stage shock-resonant compression of steam in one or more cooled gas-dynamic resonators. Moreover, in a salt-water embodiment, salt water may first be subjected to heating, fragmentation and evaporation so that steam and/or desalinated water is produced from the salt-water feed. The produced steam or desalinated water may then be directed to a hydrogen and oxygen production module in which thermal decomposition of water molecules takes place.

In both embodiments, additional superheating is produced by the interaction of incoming longitudinally pulsating detonation ("LPD") waves with detonation waves repeatedly reflected from one or more cooled conical gas-dynamic resonators. This interaction may lead to further shock-resonant compression of steam and/or to the formation of a supersonic jet containing hydrogen-containing species, oxygen-containing species, residual steam, and/or a combination thereof.

The resulting jet is tangentially supplied to a centrifugal vortex reactor. Under the influence of centrifugal forces, lighter hydrogen-containing components accumulate closer to the central region of the vortex, whereas heavier oxygen-containing components accumulate closer to the peripheral region of the vortex.

In some embodiments, a portion of the generated hydrogen and oxygen may be recycled for transition to autonomous self-sufficiency operation mode. In some embodiments, circulating feed water acts as a cooling medium and/or provides the water input for generation of primary steam having a temperature of about 100°C to about 150°C).

As shown in FIG. 1, the degree of direct thermal decomposition of water changes as a function of steam temperature. The graph as provided details that, as steam temperature increases, the mole fraction of H2O decreases, and the mole fractions of hydrogen-containing and oxygen-containing species increase.

Furthermore, as shown in FIG. 1, an increase in atomic hydrogen and atomic oxygen occurs beginning at about 3200°C and thermal dissociation of water may reach about 90% at about 3500°C to about 3700°C. In this manner, beginning at about 3700°C, a large portion of the water molecules is represented as decomposed mainly into atomic hydrogen and atomic oxygen. Accordingly, the embodiments described below use detonation compression and resonance to move primary steam from a low-temperature condition to a dissociation condition without reliance on an external solar concentrator.

Referring now to FIG. 2, in some embodiments, a pulsed detonation superheater 100 comprises a pulsed detonation chamber 102 positioned at an upstream portion of the apparatus and defining a steam preliminary overheating zone 104 therein. Moreover, pulsed detonation chamber 102 includes a concave end wall surface configured to reflect detonation waves within the chamber.

Additionally, in some embodiments, a receiver 112 is fluidly coupled to pulsed detonation chamber 102 configured to receive fuel from a fuel supply system 106 and an oxidizer from oxidizer supply system 108 for delivery into pulsed detonation chamber 102. In this manner, in some embodiments, a steam supply system 110 is also fluidly coupled to pulsed detonation chamber 102 such that steam may be introduced into pulsed detonation chamber 102 for triple stoichiometric mixture formation and/or detonation superheating. Furthermore, in some embodiments, an ignition system 114 is operably associated with pulsed detonation chamber 102 configured to initiate detonation within the chamber.

Moreover, as shown in FIG. 2, in some embodiments, pulsed detonation superheater 100 includes a detonation channel 118 which extends downstream from pulsed detonation chamber 102 to provide fluid communication between pulsed detonation chamber 102 and a first cooled gas-dynamic resonator 120. In some embodiments, first cooled gas-dynamic resonator 120 is positioned downstream of pulsed detonation chamber 102 and upstream of a second cooled gas-dynamic resonator 122, such that the first and second cooled gas-dynamic resonators are arranged in series along detonation channel 118.

Accordingly, in some embodiments, a first resonator cooling cavity 124 is associated with first cooled gas-dynamic resonator 120 and a second resonator cooling cavity 126 is associated with second cooled gas-dynamic resonator 122 such that cooling fluid may circulate adjacent to one and/or both resonators.

Moreover, in some implementations, a centrifugal vortex reactor 128 is positioned downstream of second cooled gas-dynamic resonator 122 fluidly and/or tangentially coupled thereto to receive a heated reaction stream therefrom. Additionally, a cooling system with circulating feed water 116 (i.e., "cooling system") is thermally coupled to one or more of pulsed detonation chambers 102, first cooled gas-dynamic resonator 120, and second cooled gas-dynamic resonator 122. In some embodiments, cooling system 116 also provides feed water to steam supply system 110.

As best depicted in FIG. 2, in some embodiments, hydrogen from fuel supply system 106 and oxygen from oxidizer supply system 108 are introduced into receiver 112 and form a binary stoichiometric mixture 130. In this manner, binary stoichiometric mixture 130 is cyclically supplied from receiver 112 into pulsed detonation chamber 102. In some embodiments, receiver 112 can function as a mixing volume and/or distribution plenum for the startup gases.

In some implementations. feed water from cooling system 116 may be supplied to steam supply system 110 to generate a primary steam 132. In this manner, primary steam 132 is in a low-temperature steam condition before detonation heating and can be introduced into pulsed detonation chamber 102 where it mixes with binary stoichiometric mixture 130 to form a triple stoichiometric mixture 134.

Accordingly, ignition system 114 may ignite triple stoichiometric mixture 134 in pulsed detonation chamber 102. In this manner, the ignition may generate one or more pulsed detonation waves 136 in a steam preliminary overheating zone 104 of detonation channel 118. Additionally, because pulsed detonation chamber 102 has a concave end wall surface, one or more pulsed detonation waves 136 may reflect toward a resonance region and form one or more reflected detonation waves 138.

Additionally, the converging reflected wave geometry may produce shock-resonant compression of primary steam 132 within steam preliminary overheating zone 104. As a result of this first heating stage, primary steam 132 may be preheated to about 2000°C and form a first-stage supersonic superheated steam jet 140.

Accordingly, first-stage supersonic superheated steam jet 140 proceeds downstream together with one or more pulsed detonation waves 136 through detonation channel 118. In this manner, first-stage supersonic superheated steam jet 140 and one or more pulsed detonation waves 136 may propagate through detonation channel 118 into a first cooled gas-dynamic resonator 120.

As shown in FIG. 2, first cooled gas-dynamic resonator 120 includes first resonator cooling cavity 124 and outer annular conical cavity 152. Within first cooled gas-dynamic resonator 120 one or more reflected detonation waves 138 repeatedly reflect within outer annular conical cavity 152 and/or interact with the incoming wave motion from detonation channel 118. Accordingly, this interaction can produce a multi-stage shock-resonant compression in first zone of intense thermal dissociation. In this manner, a first-stage supersonic extremely superheated steam jet 142 and/or resulting detonation wave 144 are generated. In some embodiments, the steam temperature in first zone of intense thermal dissociation 148 may reach a temperature of at least about 3500°C.

Additionally, first-stage supersonic extremely superheated steam jet 142 may be tangentially introduced directly into centrifugal vortex reactor 128 when the first dissociation stage provides a desired conversion level. In some other embodiments, first-stage supersonic extremely superheated steam jet 142 and/or resulting detonation wave 144 continue downstream for further heating.

As shown in FIG. 2, first-stage supersonic extremely superheated steam jet 142 and resulting detonation wave 144 may enter a second cooled gas-dynamic resonator 122 through a further outer annular conical cavity 152. Additionally, second cooled gas-dynamic resonator 122 may include a second resonator cooling cavity 126. Within second cooled gas-dynamic resonator 122 the repeated wave reflection and interaction with the incoming wave motion implements additional multi-stage shock-resonant compression in a second zone of intense thermal dissociation 150.

Additionally, this second stage may raise the steam temperature to at least 4000°C and generate a second-stage supersonic extremely superheated steam jet 146. In some embodiments using this second stage, a higher level of thermal decomposition of the superheated steam is created.

As shown in FIG. 2, second-stage supersonic extremely superheated steam jet 146 is tangentially fed into centrifugal vortex reactor 128. Under centrifugal forces, the dissociated products may be radially stratified so that hydrogen-rich components migrate inward and oxygen-rich components migrate outward. Additionally, cooling system feed water 116 may remove heat from pulsed detonation superheater 100 and may also serve as the source of feed water for primary steam 132. Furthermore, in some embodiments, first resonator cooling cavity 124 and/or second resonator cooling cavity 126 allow circulation of cooling feed water adjacent to the resonator walls.

In some embodiments, first cooled gas-dynamic resonator 120 and/or second cooled gas-dynamic resonator 122 may each be formed as a cooled Laval-nozzle structure with an internal annular cavity for circulation of a cooling medium. In some embodiments, pulsed detonation superheater 100 may include only a first cooled gas-dynamic resonator 120 and/or may include more than two resonator stages arranged in series along detonation channel 118 depending on target temperature and/or target dissociation level.

In some embodiments, centrifugal vortex reactor 128 may be cylindrical, spherical, conical, and/or a combination thereof. In some embodiments, fuel supply system 106 and/or oxidizer supply system 108 may each include one or more shutoff valves, check valves, regulators, flashback arrestors, purge lines, or pressure-relief devices, and/or a combination thereof. Furthermore, in some embodiments, ignition system 114 may comprise one or more spark igniters, plasma igniters, laser igniters, and/or a combination thereof.

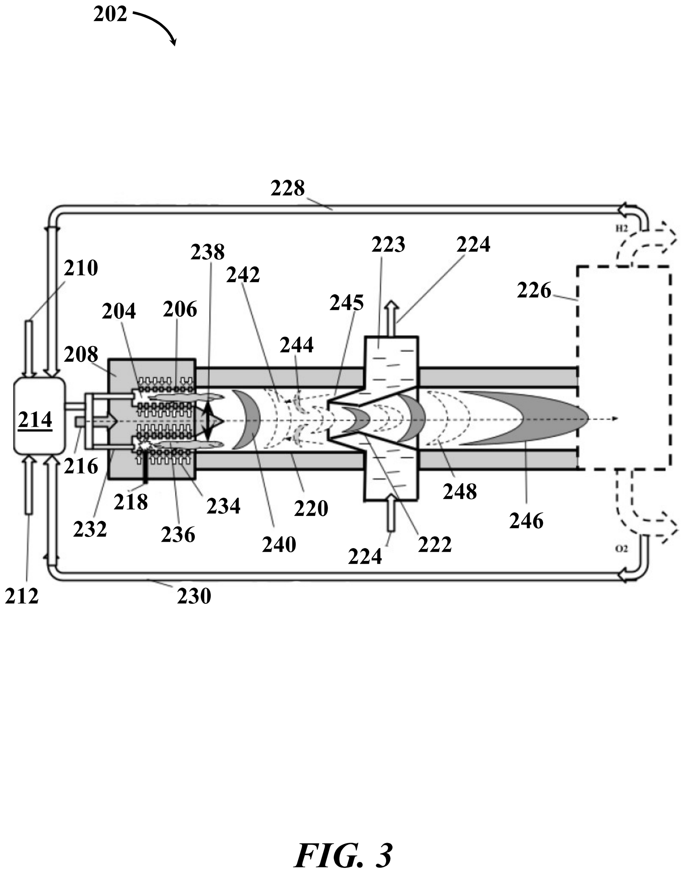

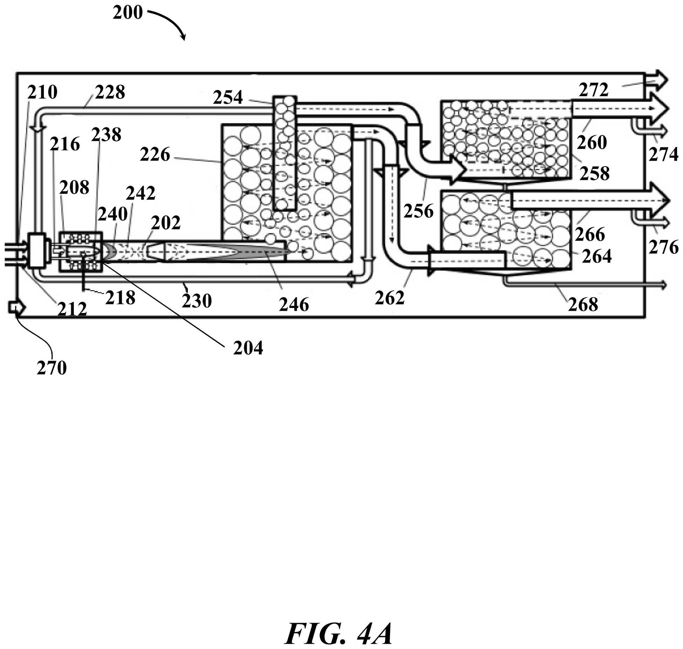

As shown in FIGS 4A - 4B, in conjunction with FIG. 3, an Advanced Oxygen and Hydrogen Generation System ("AOHGS") 200 is depicted having a detonation superheater 202 configured as a continuous-spin detonation system with rotating detonation waves.

As best shown in FIG. 3, detonation superheater 202 includes an annular detonation chamber 204 defining a continuous flow path fluidly coupled to a receiver 214. In this manner, receiver 214 receives fuel from a startup fuel supply system 210 and/or an oxidizer from a startup oxidizer supply system 212 and distributes the mixture to annular detonation chamber 202 through one or more binary mixture supply injectors 232.

Additionally, detonation superheater 202 may include a feed water supply system 216 configured to deliver feed water to an inner annular cavity 208 of detonation superheater 202. In some embodiments, the feed water is heated and introduced into annular detonation chamber 204 through one or more hole-turbulators 206 to form a primary steam jet 234.

Moreover, a detonation channel 220 extends downstream from annular detonation chamber 204 to provide fluid connection to a cooled gas-dynamic resonator 222. In some embodiments cooled gas-dynamic resonator 222 includes an outer annular conical cavity 245 and/or an inner annular cavity having cooling water 223 for thermal management.

Additionally, in some embodiments, a cooling system 224 is thermally coupled to annular detonation chamber 204 and cooled gas-dynamic resonator 222. In some embodiments, cooling system 224 can provide feed water to feed water supply system 216.

As shown in FIG. 3, during operation, a supersonic superheated steam jet 240 and a longitudinally pulsating detonation wave 242 propagate through detonation channel 220 and into cooled gas-dynamic resonator 222 where one or more reflected detonation wave 244 interact with the incoming flow to generate a supersonic extremely superheated steam jet 246 and resulting detonation wave 248. Next, centrifugal vortex reactor 226 may be positioned downstream of cooled gas-dynamic resonator 222 to receive the heated reaction stream for radial stratification. In some embodiments, a hydrogen recycle supply system 228 and/or an oxygen recycle supply system 230 are fluidly coupled to receiver 214 to selectively return portions of the product gases for transition to autonomous self-sufficiency operation mode.

Additionally, in some embodiments, startup hydrogen from startup fuel supply system 210 and startup oxygen from startup oxidizer supply system 212 are supplied to receiver 214. In this manner, receiver 214 can then distribute the mixture through one or more binary mixture supply injectors 232 into annular detonation chamber 204. In some embodiments, receiver 214 functions as a mixing manifold and surge volume for the startup gases.

Accordingly, feed water supply system 216 may introduce feed water into inner annular cavity 208. The feed water is heated and is injected into annular detonation chamber 204 as primary steam jet 234 through one or more hole-turbulators 206. Within annular detonation chamber 204, the introduced hydrogen and oxygen may combine with primary steam jet 234 to form a triple stoichiometric mixture jet 236.

In this manner, ignition system 218 may initiate the detonation process in annular detonation chamber 204. As such, a continuously rotating detonation wave 238 propagates within annular detonation chamber 204, compressing primary steam jet 234 and thereby increasing its temperature to a superheated state. As a result, primary steam jet 234 may be converted into supersonic superheated steam jet 240. Accordingly, during this process, a longitudinally pulsating detonation wave 242 may propagate through detonation channel 220 toward cooled gas-dynamic resonator 222. In some embodiments, cooled gas-dynamic resonator 222 includes outer annular conical cavity 245 and an internal cooling cavity 223 supplied by cooling system 224.

Furthermore, in some embodiments, repeatedly reflected detonation waves 244 reflect from outer annular conical cavity 245 and interact with incoming longitudinally pulsating detonation wave 242. This interaction may produce multi-stage shock-resonant compression and further superheating of the superheated steam, thereby forming a supersonic extremely superheated steam jet 246 and a resulting detonation wave 248. Accordingly, the temperature of supersonic extremely superheated steam jet 246 is at least 3500°C.

Additionally, as shown in FIG. 3, supersonic extremely superheated steam jet 246 may be tangentially directed into centrifugal vortex reactor 226 where the dissociated products are separated by radial stratification. Additionally, a hydrogen recycle supply system 228 and an oxygen recycle supply system 230 permit a portion of the produced gases from supersonic extremely superheated steam jet 246 to be returned to receiver 214 for transition to autonomous self-sufficiency operation mode.

In some embodiments, annular detonation chamber 204 may be replaced by a disk-shaped continuous-spin chamber. In some other embodiments, feed water may be introduced through one or more discrete nozzles, manifolds, apertures, and/or injectors instead of or in addition to hole-turbulators 206. In some embodiments, cooled gas-dynamic resonator 222 may be implemented as one resonator stage, two resonator stages, or more than two resonator stages depending on target superheating temperature and/or target dissociation level.

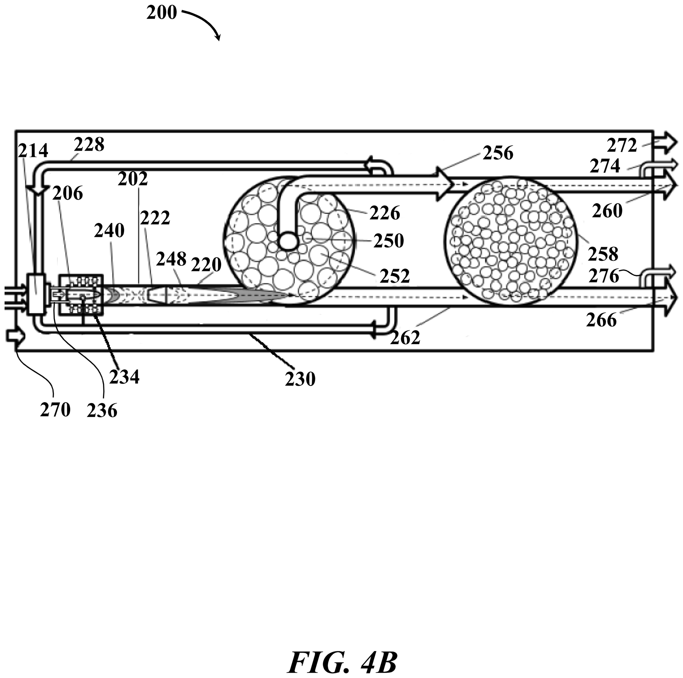

Referring now to FIGS. 4A and 4B, in some embodiments, AOHGS 200 is provided as a packaged fresh-water hydrogen and oxygen generation system incorporating detonation superheater 202. Operation of detonation superheater 202, including introduction of startup gases, formation of primary steam jet 234, generation of triple stoichiometric mixture jet 236, and establishment of continuously rotating detonation wave 238 to produce supersonic superheated steam jet 240, may proceed as described above with respect to FIG. 3.

In this manner, supersonic superheated steam jet 240 and longitudinally pulsating detonation wave 242 are delivered through detonation channel 220 to cooled gas-dynamic resonator 222, where interaction with one or more reflected detonation waves 244 produces supersonic extremely superheated steam jet 246. Supersonic extremely superheated steam jet 246 is then tangentially introduced into centrifugal vortex reactor 226 for radial stratification of hydrogen-containing and oxygen-containing components.

As shown in FIG. 4B, in some embodiments, centrifugal vortex reactor 226 separates the dissociated flow into a hydrogen-enriched central region 250 and an oxygen-enriched peripheral region 252. The radial distribution is produced by centrifugal forces within centrifugal vortex reactor 226. Hydrogen from hydrogen-enriched central area 250 may be removed through a hydrogen outlet system 254 and tangentially supplied through a hydrogen cooling supply system 256 into a hydrogen vortex cooler 258. Accordingly, hydrogen vortex cooler 258 may decrease the temperature of the hydrogen stream before discharge through a cooled hydrogen outlet system 260.

Moreover, in some embodiments, oxygen from oxygen-enriched peripheral area 252 is tangentially supplied through an oxygen cooling supply system 262 into an oxygen vortex cooler 264. In this manner, oxygen vortex cooler 264 may decrease the temperature of the oxygen stream before discharge through a cooled oxygen outlet system 266. Additionally, AOHGS 200 may include a condensate removal system 268 configured to receive condensate from hydrogen vortex cooler 258 and oxygen vortex cooler 264 to recycle the condensate as water input.

As shown in FIGS. 4A and 4B, in some embodiments, AOHGS 200 includes a cooling-water inlet 270 which may introduce cooling feed water into cooling system 224. Additionally, AOHGS 200 may include a cooling-water outlet 272 to remove heated feed water from the cooling system 224. In this manner, the cooling loop controls the temperature of detonation superheater 202, cooled gas-dynamic resonator 222, and adjacent components while also providing heated feed water.

Furthermore, once hydrogen and oxygen production reaches operating levels a portion of the generated hydrogen may be returned through hydrogen recycle supply system 228 and a portion of the generated oxygen may be returned through oxygen recycle supply system 230. In some embodiments, the returned gases may be used for triple stoicheometric mixture conditioning, ignition support, transition to autonomous self-sufficiency operation mode, and/or other transient operating functions while externally supplied fuel and oxidizer may continue to be provided as needed. Cooled hydrogen outlet system 260 and cooled oxygen outlet system 266 may also deliver hydrogen and oxygen through respective lines 274 and 276 to a hydrogen cell and/or another downstream consumer.

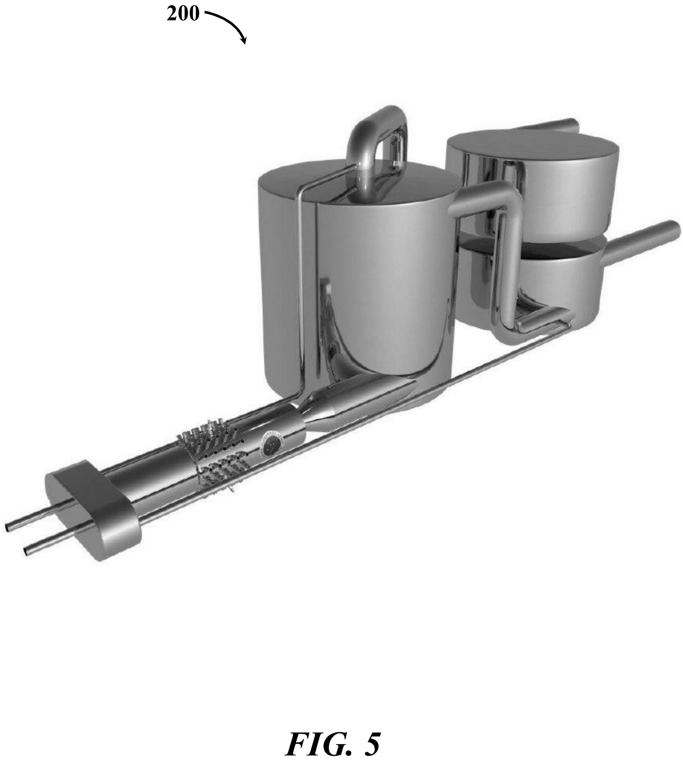

As depicted in FIG. 5, AOHGS 200 may be arranged as a generally coaxial assembly in which detonation steam superheater 202, centrifugal vortex reactor 226, hydrogen vortex cooler 258, and oxygen vortex cooler 264 are fluidly coupled in series. In this manner, the cooling arrangement shown in FIGS. 4A, 4B, and 5 may be a total cooling system in which circulating feed water surrounds and/or communicates thermally with the detonation steam superheater and/or associated structures. In some other embodiments, individual cooling circuits may be provided for selected components in addition to and/or instead of a common cooling container.

In some embodiments, AOHGS 200 may further include one or more compressors, dryers, storage vessels, accumulators, manifolds, and/or downstream heat exchangers coupled to cooled hydrogen outlet system 260 and cooled oxygen outlet system 266. In some embodiments, AOHGS 200 may be mounted on a skid, within a transportable container and/or within a pressure-rated enclosure for terrestrial and/or aerospace use. In some embodiments, gas-dynamic resonator 222 may be removable from its housing to facilitate inspection, service, and/or replacement. Additionally, gas dynamic resonator 222 may include external fins, cooling radiators, stiffening ribs, and/or additional cooling passages.

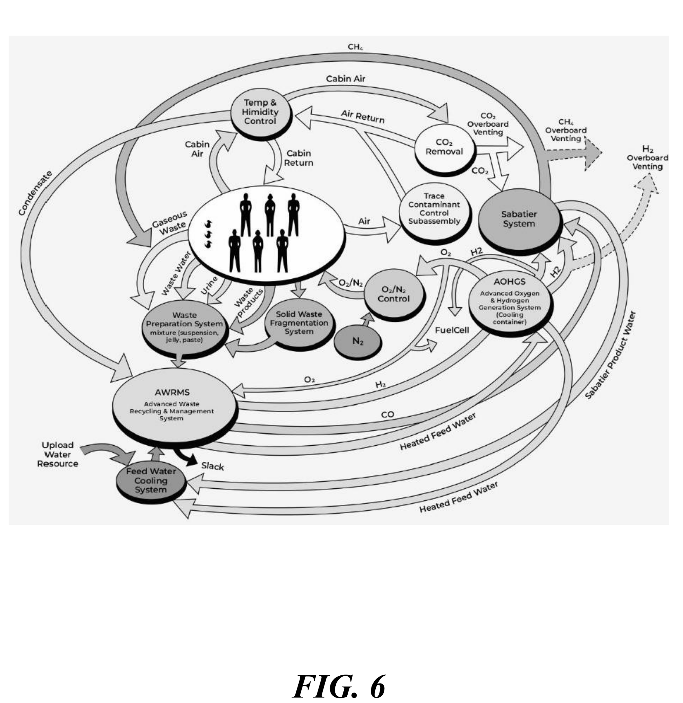

As shown in FIG. 6, in some embodiments, AOGHS 200 can be integrated into an Advanced Environmental Control and Life Support System ("AECLSS") of a space station and/or rocket. In this manner, AOGHS may be coupled with a cabin air system, a CO2 removal system, a Sabatier system, a hydrogen fuel cell, an oxygen/nitrogen control subsystem, waste handling subsystems, a feed-water cooling system, and/or a combination thereof. In this manner, hydrogen produced by AOHGS 200 may be directed to the Sabatier system and/or the hydrogen fuel cell. Moreover, oxygen produced by AOHGS 200 may be directed to life-support functions, including cabin atmosphere control. Product water, heated feed water, condensate, and related streams may be routed between AOHGS 200 and the other subsystems.

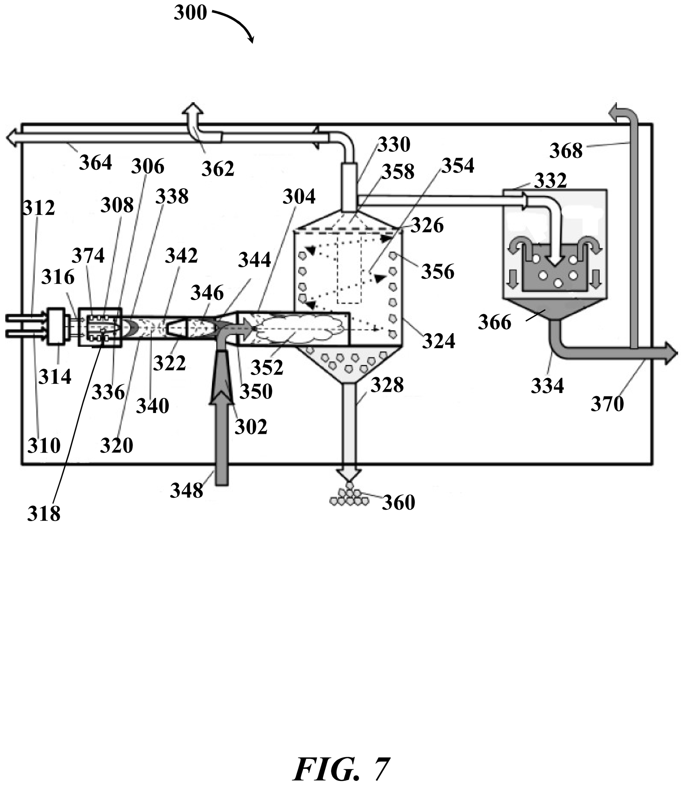

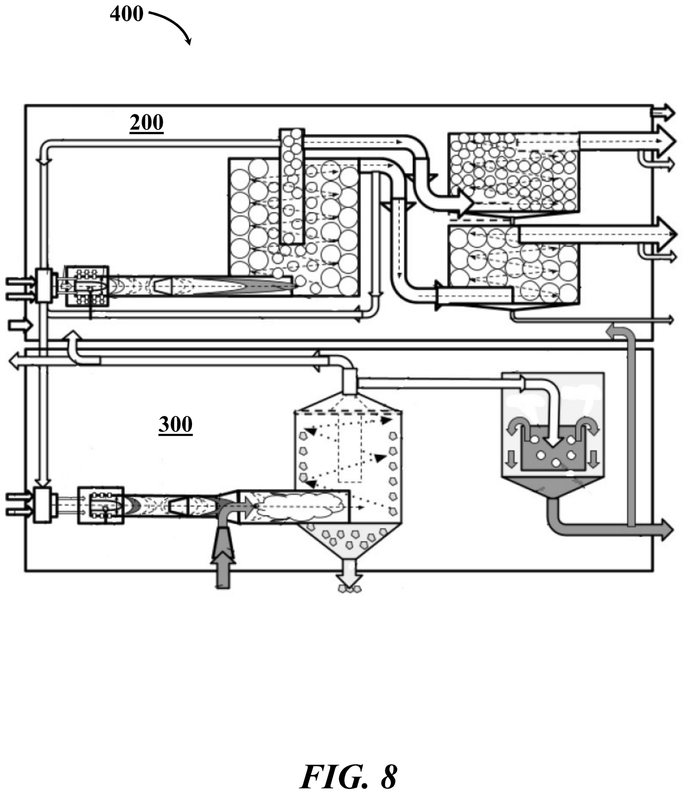

As shown in FIG. 7 in conjunction with FIG. 8, in some embodiments, an Advanced Desalination Salt Water System ("ADSWS") may be operably coupled to AOGHS 200. ADSWS 300 includes a salt-water supply system with dispenser 302 that is fluidly coupled to a heating, fragmentation and evaporation chamber 304. Additionally, in some embodiments, heating, fragmentation and evaporation chamber 304 is positioned to receive a heated flow from a detonation steam superheater 306.

In some embodiments, detonation steam superheater 306 includes an annular detonation chamber 308, a receiver 314, one or more injectors 316, and an ignition system 318, and/or a combination thereof. In this manner, detonation steam superheater 306 creates one or more detonation conditions using fuel and oxygen supplied by a startup fuel supply system 310 and a startup oxidizer supply system 312. Moreover, in some embodiments, detonation superheater 306 is further fluidly coupled to a detonation channel 320 and gas-dynamic resonator 322 arranged upstream of a centrifugal vortex reactor 324 such that a heated and accelerated flow is delivered into centrifugal vortex reactor 324. Furthermore, in some embodiments, ADSWS 300 includes a protective shield 326, a sea-salt removal system 328, a steam removal system 330, a steam condenser 332, and a desalinated-water drainage system 334 for separating and/or recovering steam, desalinated water, salt byproducts, and/or a combination thereof.

Additionally, in some embodiments, a salt-water inlet stream 348 is delivered through salt-water supply system with a dispenser 302 and is introduced into heating, fragmentation and evaporation chamber 304 as sprayed salt-water jet 350. Accordingly, sprayed salt-water jet 350 may be distributed within heating, fragmentation and evaporation chamber 304 to increase interfacial surface area prior to contact with a detonation-generated superheated flow. In this manner, sprayed salt-water jet 350 may be positioned to interact with a high-temperature, super-velocity stream produced by detonation steam superheater 306 resulting in formation of a two-phase flow including evaporating microdroplets 354, steam stream 358, and entrained sea-salt crystals 356 for subsequent separation within centrifugal vortex reactor 324.

Moreover, in some embodiments, during startup of detonation superheater 306 hydrogen from startup fuel supply system 310 and oxygen from startup oxidizer supply system 312 are combined in receiver 314 and introduced through injectors 316 into annular detonation chamber 308. Accordingly, ignition system 318 may combustion within annular detonation chamber 308 which produces continuously rotating detonation waves 336 and a supersonic superheated steam jet 338. Furthermore, a longitudinally pulsating detonation waves 340 may travel through detonation channel 320 into gas-dynamic resonator 322.

Additionally, in some embodiments, one or more reflected detonation waves 342 repeatedly interact with one or more incoming longitudinally pulsating detonation waves 340, resulting in multi-stage shock-resonant compression and further superheating of the steam. As a result, the steam is converted into a supersonic extremely superheated steam jet 344 and a resulting detonation wave 346.

In some embodiments, supersonic extremely superheated steam jet 344 and resulting detonation wave 346 are directed into heating, fragmentation and evaporation chamber 304 where they contact sprayed salt-water jet 350. Under this exposure, sprayed salt-water jet 350 is further fragmented, heated, and converted into two-phase torch 352 containing evaporating microdroplets 354 and/or entrained sea-salt crystals 356.

As such, two-phase torch 352 may be tangentially supplied into centrifugal vortex reactor 324. Accordingly, the salt-water microdroplets continue to evaporate and steam stream 358 is separated from sea-salt crystals 356 under centrifugal and gravitational effects. Moreover, protective shield 326 is positioned to reduce passage of sea-salt crystals 356 into steam removal system 330. In this manner, sea-salt crystals 356 are directed downward and removed through sea-salt removal system 328 to sea-salt outlet 360.

As shown in FIG. 7, in some embodiments, a first portion of steam stream 358 may be removed through steam removal system 330 and discharged through steam outlet to AOHGS 362. Moreover, a second portion may be discharged through steam outlet to another consumer 364. Another portion of steam stream 358 may be supplied to steam condenser 332, which in the illustrated embodiment includes a bubbler. Moreover, in some embodiments, condensation within steam condenser 332 forms desalinated water 366, which may be discharged through desalinated-water drainage system 334 as desalinated-water outlet to AOHGS 368 or desalinated-water outlet to another consumer 370. In this manner, ADSWS 300 can produce steam, desalinated water, and sea salt in parallel.

In some embodiments, ADSWS 300 may use a pulsed detonation steam superheater in place of continuous-spin detonation steam superheater 306. In some embodiments, salt-water supply system with dispenser 302 may include one or more filters, screens, atomizers, swirl nozzles, ultrasonic nozzles, pressure nozzles, and/or a combination thereof configured to alter droplet size distribution. In some embodiments, fragmentation and evaporation chamber 304 and/or centrifugal vortex reactor 324 may include corrosion-resistant liners, replaceable wear inserts, anti-scaling coatings, and/or internal wash manifolds. In some embodiments, sea-salt removal system 328 may include a screw conveyor, gravity chute, rotary valve, lock hopper, and/or a combination thereof.

Referring now to FIG. 8, in some embodiments, the present disclosure includes an integrated system 400, identified as Advanced Oxygen and Hydrogen Generation System from salt water ("AOHGS-SW"). Accordingly, integrated system 400 combines AOHGS 200 and ADSWS 300 in a coordinated arrangement. In this manner, AOHGS 200 may be positioned as the upper module and ADSWS 300 is positioned as the lower module. In some other embodiments, AOGHS may be positioned as the lower module and ASWS 300 is positioned as the upper module.

As shown in FIG. 8, in some embodiments, AOHGS 200 may first be started using startup hydrogen and oxygen supplied through startup fuel supply system 210 and startup oxidizer supply system 212, and ADSWS 300 may be started using startup hydrogen and oxygen supplied through startup fuel supply system 310 and startup oxidizer supply system 312. After startup, at least a portion of the hydrogen and oxygen generated by AOHGS 200 may be supplied to ADSWS 300 as supplemental process gases, for restart, for startup gas replenishment, for transition to autonomous self-sufficiency operation mode, for other transient operating conditions, and/or a combination thereof.

Additionally, in some embodiments, ADSWS 300 generates steam and desalinated water from incoming salt water and separates sea salt as a byproduct. At least a portion of the generated steam and/or desalinated water is supplied from ADSWS 300 to AOHGS 200. AOHGS 200 may then utilize the desalinated feed to generate hydrogen and oxygen in the manner described above. In this manner, integrated system 400 permits coordinated production of hydrogen, oxygen, desalinated water, steam, and sea salt from a salt-water feed.

In some embodiments, the arrangement of integrated system 400 also permits thermal and/or fluid coupling between the upper and lower modules. Product gases from AOHGS 200 may be delivered to ADSWS 300 as supplemental process gases or transient operating gases, while product steam and/or desalinated water from ADSWS 300 may be delivered as feed streams to AOHGS 200.

In some embodiments, AOHGS 200 and ADSWS 300 may share one or more cooling loops, pumps, valves, controllers, heat exchangers, and/or a combination thereof. In some embodiments, AOHGS 200 and ADSWS 300 may be housed in a common enclosure, in stacked vessels, in side-by-side vessels, and/or in separate enclosures connected by insulated conduits. In some embodiments, desalinated water may first be accumulated in one or more intermediate storage vessels before being metered into AOHGS 200. In some embodiments, multiple AOHGS modules, multiple ADSWS modules, and/or paired integrated systems 400 may be operated in parallel and/or in cascaded arrangements to increase production capacity and/or permit service of one module while another module remains in operation.

In some other embodiments, the fresh-water hydrogen production module may use pulsed detonation superheater. In such embodiments, centrifugal vortex reactor may be provided with outlet systems, coolers, condensate removal, and/or recycle lines. In some other embodiments, one or more sensors may monitor pressure, temperature, flow rate, gas composition, salt concentration, conductivity, or coolant condition, and one or more control modules may coordinate operation of the startup fuel supply systems, startup oxidizer supply systems, feed water supply system 216, salt-water supply system with dispenser 302, ignition systems 114 and/or 318, recycle supply systems 228 and/or 230, cooling-water circulation, and/or a combination thereof. In this manner, such control arrangements may be used during startup, steady-state operation, shutdown, and/or transition between operating states.

In some implementations, a quench stage may be positioned downstream of first cooled gas-dynamic resonator 120, downstream of second cooled gas-dynamic resonator 122, downstream of cooled gas-dynamic resonator 222, at the inlet of centrifugal vortex reactor 128 and/or 226, and/or within centrifugal vortex reactor 128 or 226. In this manner, the quench stage may comprise an injection of cooler steam, water, inert gas, and/or recycled condensate. In some implementations, produced hydrogen and/or oxygen may be compressed, dried, stored, and/or directly supplied to downstream users such as a fuel cell, a Sabatier system, propulsion devices, life-support systems, or other consumers.

In some other embodiments, one or more external energy sources may be provided to supply at least a portion of the thermal energy used to heat feed water, generate primary steam, superheat steam, maintain target detonation conditions, operate one or more auxiliary components, or support startup, steady-state operation, shutdown, or transition between operating states. In some other embodiments, the external energy source may comprise electrical power, electrical resistance heating, induction heating, microwave heating, plasma heating, laser heating, combustion of an external fuel, heat exchange with an external thermal source, waste industrial heat, nuclear-derived heat, concentrated solar thermal energy, and/or combinations thereof.

In some other embodiments, the amount of externally supplied fuel, oxidizer, electrical energy, and/or thermal energy may be controlled in response to one or more sensed operating parameters including pressure, temperature, flow rate, gas composition, steam quality, salt concentration, conductivity, or coolant condition. In some other embodiments, recycled hydrogen and oxygen, externally supplied fuel and oxidizer, and one or more external energy sources may be used together during startup, restart, steady-state operation, shutdown, and/or other transient operating conditions, such that the recycle streams are not required to be the sole energy input to the system

The advantages set forth above, and those made apparent from the foregoing description, are efficiently attained. Since certain changes may be made in the above construction without departing from the scope of the invention, it is intended that all matters contained in the foregoing description or shown in the accompanying drawings shall be interpreted as illustrative and not in a limiting sense.

All publications, patents, and patent applications mentioned in this specification are herein incorporated by reference to the same extent as if each individual publication, patent, or patent application was specifically and individually indicated to be incorporated by reference. To the extent publications and patents or patent applications incorporated by reference contradict the disclosure contained in the specification, the specification is intended to supersede and/or take precedence over any such contradictory material.

It is also to be understood that the following claims are intended to cover all of the generic and specific features of the subject matter herein described, and all statements of the scope of the claimed subject matter which, as a matter of language, might be said to fall therebetween.

## Claims

1. A system for producing hydrogen and oxygen from a water-derived feed using detonation wave energy, the system comprising:
a. a detonation chamber;
b. a supply system configured to provide a fuel, an oxidizer, and a water-derived feed to the detonation chamber;
c. a detonation channel extending downstream from the detonation chamber;
d. at least one gas-dynamic resonator disposed along the detonation channel;
e. a centrifugal vortex reactor fluidly coupled downstream of the at least one gas-dynamic resonator; and
f. wherein the system is configured to generate detonation waves to heat the water-derived feed to form a supersonic jet, thermally dissociate at least a portion of the water-derived feed into hydrogen-containing species and oxygen-containing species, and separate the hydrogen-containing species and oxygen-containing species within the centrifugal vortex reactor.

2. The system of claim 1, wherein the water-derived feed comprises fresh water or steam generated from fresh water.

3. The system of claim 1, wherein the water-derived feed comprises steam and/or desalinated water derived from salt water.

4. The system of claim 1, wherein the detonation chamber is configured as a pulsed detonation chamber or a continuous-spin annular detonation chamber.

5. The system of claim 1, wherein the at least one gas-dynamic resonator comprises one or more conical resonators configured to reflect detonation waves and produce multi-stage compression.

6. The system of claim 1, further comprising a cooling system thermally coupled to the detonation chamber and/or the at least one gas-dynamic resonator.

7. The system of claim 1, wherein the centrifugal vortex reactor is configured to receive the supersonic jet tangentially and to radially stratify the hydrogen-containing species and oxygen-containing species.

8. The system of claim 1, further comprising at least one outlet system configured to recover hydrogen, oxygen, or both.

9. The system of claim 1, further comprising a recycle system configured to return at least a portion of produced gases for transition to autonomous self-sufficiency operation mode.

10. The system of claim 1, further comprising one or more control systems configured to regulate flow, temperature, pressure, or composition of one or more streams.

11. A method for producing hydrogen and oxygen from a water-derived feed using detonation wave energy, the method comprising:
a. introducing a fuel, an oxidizer, and the water-derived feed into a detonation chamber;
b. generating one or more detonation waves to heat the water-derived feed and form a supersonic jet;
c. compressing and superheating the supersonic jet using one or more gas-dynamic resonators;
d. thermally dissociating at least a portion of the water-derived feed into hydrogen-containing species and oxygen-containing species; and
e. tangentially introducing the supersonic jet into a centrifugal vortex reactor to separate the hydrogen-containing species and oxygen-containing species.

12. The method of claim 11, wherein the water-derived feed comprises fresh water or steam derived from fresh water.

13. The method of claim 11, wherein the detonation waves are generated using pulsed detonation or continuous-spin detonation.

14. The method of claim 11, wherein the compressing and superheating comprises multi-stage shock-resonant compression.

15. The method of claim 11, further comprising quenching the supersonic jet downstream of the gas-dynamic resonator.

16. The method of claim 11, further comprising recycling at least a portion of produced hydrogen and/or oxygen for transition to autonomous self-sufficiency operation mode.

17. An integrated system for producing hydrogen and oxygen from salt water using detonation wave energy, the system comprising:
a. a desalination module configured to receive salt water and produce a steam stream, desalinated water, or both;
b. a hydrogen and oxygen production system according to one of claims 1 to 10 and fluidly coupled to the desalination module to receive the steam stream and/or desalinated water.

18. The system of claim 17, wherein the desalination module comprises a detonation-driven heating system configured to fragment and evaporate salt water and separate salt from steam.

19. The system of claim 17, wherein the hydrogen and oxygen production system and the desalination module are configured to exchange one or more of gases, liquids, or heat during operation.

20. The system of claim 17, wherein the desalination module comprises a centrifugal vortex reactor configured to separate sea-salt particles from the steam stream prior to delivery to the hydrogen and oxygen production module.
